# EUROPÄISCHE PATENTSCHRIFT

(11) **EP 2 162 749 B1**
(45) Veröffentlichungstag und Bekanntmachung des Hinweises auf die Patenterteilung: **05.12.2012**
(21) Anmeldenummer: 08760898.0
(22) Anmeldetag: 12.06.2008
(51) Int. Cl.: H02K 7/10, H02K 29/08, H02K 29/06, G01P 3/44, G01D 5/20, G01D 11/24

(54) **STEUERVORRICHTUNG MIT POSITIONSSENSOR**
CONTROL APPARATUS HAVING A POSITION SENSOR
DISPOSITIF DE COMMANDE AVEC DÉTECTEUR DE POSITION

(30) Priorität: 30.06.2007 DE 102007032139
(43) Veröffentlichungstag der Anmeldung: 17.03.2010
(73) Patentinhaber: Robert Bosch GmbH, 70442 Stuttgart (DE)
(72) Erfinder: HEIM, Michael, 71088 Holzgerlingen (DE)
(86) Internationale Anmeldenummer: PCT/EP2008/057352
(87) Internationale Veröffentlichungsnummer: WO 2009/003814

(56) Entgegenhaltungen:
- EP-A- 0 844 418
- EP-A- 0 984 208
- EP-A- 1 193 423
- WO-A-2006/129811

## Beschreibung

Die Erfindung bezieht sich auf eine elektronische Steuervorrichtung zur Steuerung eines Automatikgetriebes mit einer Steuerschaltung, einem integrierten Stecker und einem integrierten Positionssensor in einem Gehäuse, wobei der Positionssensor einen Stator und einen Rotor umfasst. Die Erfindung bezieht sich auch auf ein Verfahren zur Herstellung einer Steuervorrichtung.

Eine Steuerschaltung steuert ein Getriebe aufgrund von Informationen von Motorkennwerten, wie zum Beispiel der Motordrehzahl und einem Positionssensor, der die vom Fahrer gewünschte Gangwahl erfasst. Der Positionssensor detektiert also den vom Fahrer mittels eines Ganghebels ausgewählten Gang für das Getriebe aufgrund einer Stellung eines Rotors zu einem Stator des Positionssensors.

Die EP 1 489 339 A1 offenbart eine Steuerungsvorrichtung für ein Automatikgetriebe mit einem berührungslosen Hall-Positionssensor, einer keramischen Steuerungsplatine und einem zweischaligen Gehäuse, das eine Gehäusegrundplatte und einen Gehäusedeckel umfasst. Die Steuerungsplatine ist auf die Gehäusegrundplatte mit wärmeabführenden Klebeverbindungen aufgeklebt. Eine Verbindungsplatine ist auf die Grundplatte zur Erdung aufgeschraubt. Elektrische Klebeverbindungen kontaktieren die Verbindungs-platine mit Anschlüssen des Hall-Positionssensors und mit Anschlüssen der Steuerungsplatine. Die Verbindungsplatine dient lediglich zur elektrischen Stromverbindung und weist keine elektronischen Schaltungselemente auf. Gemäß einer besonderen Ausführungsform ist die Steuerungsplatine auf die Gehäusegrundplatte geschraubt.

Die EP 0 844 418 A2 beschreibt eine elektronische Steuereinheit mit integriertem Positionserfassungsschalter für ein Automatikgetriebe. Eine Basisplatine mit einem darauf angeordneten Positionserfassungsschalter ist in einem einzelnen Gehäuse aufgenommen.

Die EP 09 84 208 A2 beschreibt einen Schalter zum Schalten von Kontakten in Übereinstimmung mit den Stellungen infolge des Betriebs eines Automatikgetriebes von einem Kraftfahrzeug. Der statische Teil eines Positionssensors wird in ein aus Kunstharz hergestelltes Gehäuse eingesetzt und die zugehörigen elektrischen Kontakte im Boden verschweißt. In dem rotatorischen Sensorteil können Permanentmagnete in einen Bügel mittels eines Spritzgussverfahrens angebracht sein.

Es ist Aufgabe der Erfindung eine Steuervorrichtung und ein Herstellungsverfahren der Eingangs genannten Art zu schaffen, das die Erzeugung von Steuervorrichtungen mit einer höheren Qualität des Positionssensors ermöglicht.

Erfindungsgemäß wird die Aufgabe durch den Gegenstand des Patentanspruchs 1 und 10 gelöst. Vorteilhafte Weiterbildungen ergeben sich aus den abhängigen Ansprüchen.

Ein wesentlicher Erfindungsgedanke ist, dass der Stator des Positionssensors vom Material des Gehäuses ortsfest eingefasst d.h. eingespritzt ist. Dies hat den Vorteil, dass Montagetoleranzen, gegenüber einem Einkleben eines Stators in ein Gehäuse deutlicher reduziert werden. Dies ist wichtig, da die Montagetoleranzen sich direkt auf die Systemtoleranzen des Positionssensors auswirken. Die Reduktion der Montagetoleranzen führt somit zu einer Reduktion der Systemtoleranzen, so dass sich die einzustellende Toleranzbreite von elektrischen Signalen des Positionssensors verringert und die Herstellungsqualität von großen Serien sich verbessert. Eine Einstellung des Positionssensors kann deutlich schneller erfolgen, da die Toleranzbreite der elektrischen Signale des Positionssensors deutlich kleiner ist. Der Rotor kann rotatorisch um den Stator des Positionssensors bewegbar angeordnet sein. Es sind natürlich auch Ausführungsformen möglich, bei denen der Rotor zum Stator translatorisch berührungslos bewegbar ist.

Vorteilhafterweise umfasst der Stator zwei Spulen, die mit einer Spule am Rotor nach einem induktiven Verfahren zusammenwirken. Ein induktiv arbeitender Positionssensor hat gegenüber herkömmlichen Positionssensoren den Vorteil, dass er sehr genau, mit einer hohen Auflösung und hohen Zuverlässigkeit arbeitet.

Um die Fertigungskosten und die Bauteilanzahl sowie die Herstellungsschritte zu minimieren, ist vorteilhafterweise die Sensorleiterplatte des Positionssensors in das Gehäuse eingespritzt. Dies hat den Vorteil, dass der Montageschritt des Einbringens der Sensorleiterplatte im Gehäuse entfällt und die Sensorleiterplatte positionsgenau im Gehäuse angeordnet ist.

Damit der Positionssensor mit dem drehbaren Rotor im Gehäuse verliersicher eingebaut ist, ist das Gehäuse mehrteilig, insbesondere dreiteilig, aufgebaut, so dass der Rotor vom Gehäuse eingeschlossen wird. Das Gehäuse umfasst bevorzugt eine Grundplatte, ein Gehäusezwischenteil und einen Deckel. Am Gehäusezwischenteil ist ein nach außen weisender Steckeranschluss ausgebildet. Über den Steckeranschluss erfolgt eine Informationsein- und -ausgabe an die Steuerschaltung sowie die Stromversorgung.

Erfindungsgemäß ist die Sensorleiterplatte in das Gehäusezwischenteil eingespritzt. Dabei sind die Randbereiche der Sensorleiterplatte im Außenumfang mit Stegen aus dem Material des Gehäusezwischenteils eingefasst. Der Randbereich eines kreisförmigen Ausschnitts zum Durchtritt einer Wählhebelwelle ist von einem ringförmigen Steg, der vom Gehäusezwischenteil ausgebildet ist, eingefasst.

Bevorzugterweise ist das Gehäusezwischenteil und der Deckel aus Kunststoff und die Grundplatte aus Aluminium hergestellt. Die Grundplatte ist aus Aluminium hergestellt, um die beim Betrieb der Steuerschaltung entstehende Verlustwärme abzuführen. Kunststoff ist für das Gehäusezwischenteil und den Deckel ein preiswertes Material, das komplexe Formgebungen zulässt und einfach im Spritzgußverfahren verformbar ist. Außerdem ist Kunststoff ein bevorzugtes Material für Leichtbau im Kraftfahrzeugbau.

Um die elektrischen Verbindungen zwischen der Sensorleiterplatte und der Steuerschaltung zu vereinfachen, sind die die Kante der Sensorleiterplatte einfassenden Stege im Bereich von elektrischen Bondverbindungen unterbrochen. Die Bondverbindungen, kurz ausgesprochen so genannte Bonds, können somit zwischen Sensorleiterplatte und Steuerschaltung im Wesentlichen auf gleichem Gehäuseniveau und materialsparend verlegt werden.

Das erfindungsgemäße Verfahren zur Herstellung einer mit oben beschriebenen Merkmalen definierte Steuervorrichtung wird dadurch gelöst, dass ein Stator eines Positionssensors in ein Gehäuse eingespritzt wird. Das erfindungsgemäße Verfahren hat gegenüber einem in das Gehäuse einzuklebenden Stator den Vorteil, dass ein Versatz in x-, y- und/oder z-Richtung deutlich geringer auftritt und somit die Systemtoleranzen des Positionssensors, die sich aus der Relation zwischen Rotor und Stator ergeben, deutlich mit einer hohen Reproduziergenauigkeit reduziert sind. Die Einstellbarkeit bzw. Geschwindigkeit der Einstellung eines Positionssensors verbessert sich somit erheblich.

Es versteht sich, dass die vorstehend genannten und nachstehend noch zu erläuternden Merkmale nicht nur in der jeweils angegebenen Kombination, sondern auch in anderen Kombinationen verwendbar sind.

Die Erfindung wird im Folgenden anhand eines Ausführungsbeispiels unter Bezugnahme auf Zeichnungen näher erläutert. Es zeigen:
- Fig. 1: eine perspektivische Ansicht einer Steuervorrichtung ohne Deckel,
- Fig. 2: eine Querschnittsansicht in perspektivischer Form der Steuervorrichtung, und
- Fig. 3: eine Explosionsdarstellung der Steuervorrichtung.

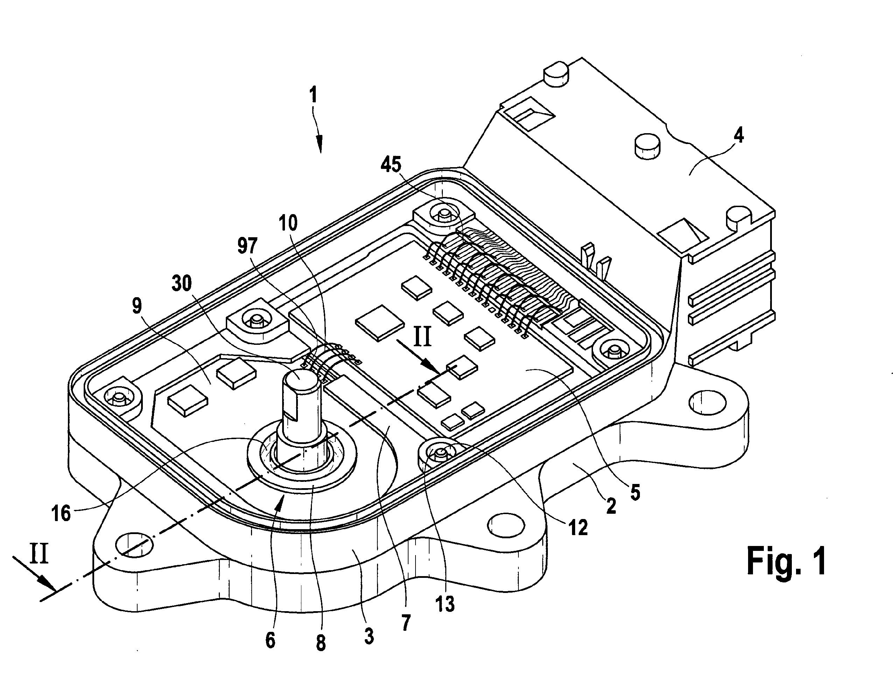

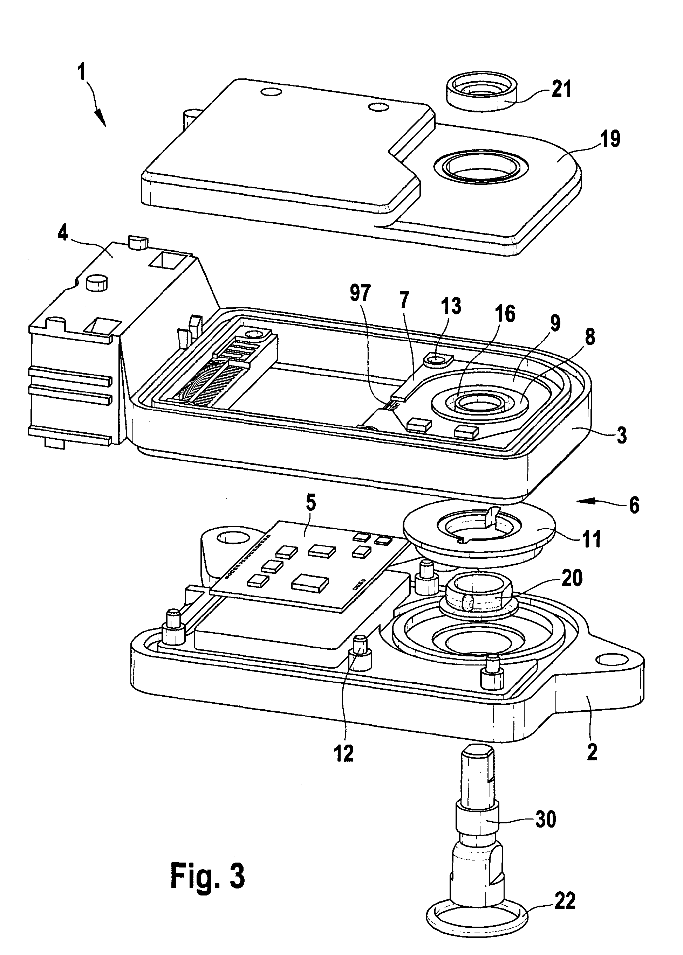

Die Fig. 1 zeigt in perspektivischer Ansicht eine erfindungsgemäße Steuervorrichtung 1 mit einer Grundplatte 2, die aus Aluminium hergestellt ist. Auf die Grundplatte 2 ist ein Gehäusezwischenteil 3 aufgesetzt. Das Gehäusezwischenteil 3 hat auf einer Seite einen Steckeranschluss 4. Das Gehäusezwischenteil 3 könnte somit auch als Steckergehäuse bezeichnet werden. Der Steckeranschluß 4 umfasst elektrische Anschlüsse zur Stromversorgung und zur Aufnahme und Abgabe von elektrischen Informations- und Steuersignalen. Das Gehäusezwischenteil 3 ist mit der Grundplatte 2 in der dargestellten besonderen Ausführungsform über fünf Nietstellen befestigt. Die fünf Nietstellen stehen, wie in der Fig. 3 zu sehen ist, als Zapfen 12 hervor und greifen in komplementäre Befestigungsaugen 13 des Gehäusezwischenteils 3 ein.

Auf der Grundplatte 2 ist die Steuerschaltung 5 auf einem keramischen Schaltungsträger angeordnet. Der keramische Schaltungsträger ist zur Wärmeabfuhr auf die Grundplatte 2 aufgeklebt. Daneben ist ein Positionssensor 6 angeordnet. Der Positionssensor 6 arbeitet nach einem induktiven Messverfahren mit zwei Spulen als Stator und einer Spule an einem Rotor 11. Eine Spule der beiden Spulen am Stator ist eine Senderspule und die zweite Spule eine Empfängerspule am Stator. Die Spule am Rotor 11 verstärkt oder verringert die von der Empfängerspule gemessene Induktivität abhängig von der Position des Rotors 11.

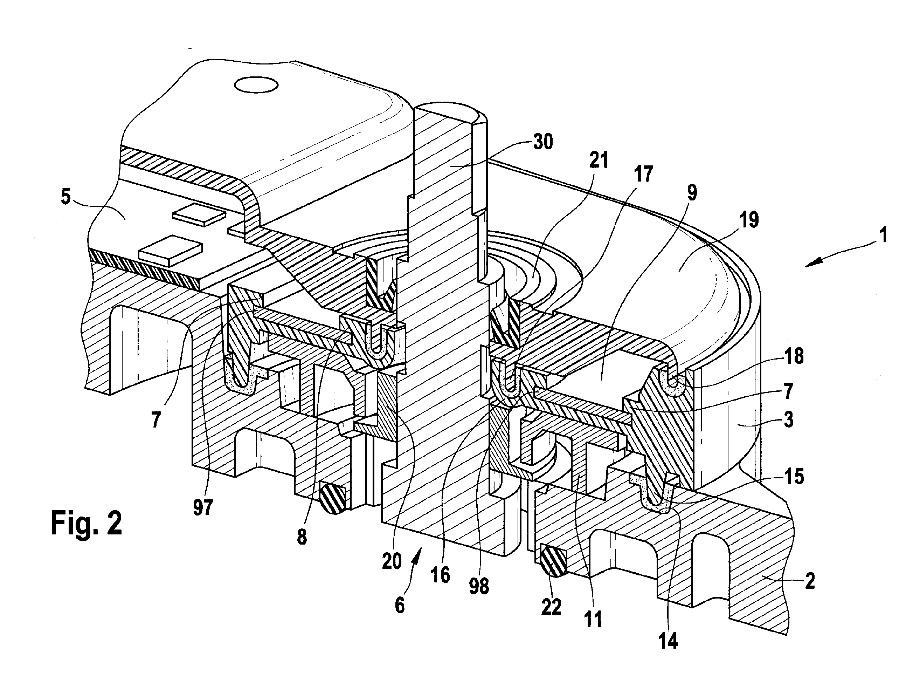

Erfindungsgemäß ist der Stator des berührungslosen, rotatorischen Positionssensors 6 von Stegen 7, 8 eingefasst. Der Stator umfasst sowohl die mindestens zwei Spulen zur induktiven Positionsmessung als auch eine Sensorleiterplatte 9 mit einer darauf angeordneten Auswerteelektronik. Die Auswerteelektronik misst den induktiv erzeugten Strom, der mit der weiteren induktiven Spule an dem in der Fig. 2 und 3 dargestellten Rotor 11 zusammenwirkt. Die Auswerteschaltung gibt die ausgewerteten Informationen zu definierten Positionen eines vom Fahrer bedienbaren Ganghebels entsprechend über elektrische, so genannte Bondverbindungen 10 aus Aluminium-Dickdraht, an die Steuerschaltung 5 weiter. Bondverbindungen 45 verbinden elektrische Kontakte der Steuerschaltung mit Kontakten vom Stecker 4.

Der Positionssensor 6 kann damit statisch die Position des Rotors 11 feststellen. Die elektrischen Anschlüsse für die Bondverbindungen 10 an der Sensorleiterplatte 9 befinden sich an einem Randbereich 97 d.h. einem Umfangsrand der Sensorleiterplatte 9, der der Steuerschaltung 5 am nächsten liegt. In diesem Bereich der Anschlüsse sind die die Sensorleiterplatte 9 einfassenden Stege 7 unterbrochen, um einen möglichen kurzen Verbindungsweg zu realisieren.

Die Sensorleiterplatte 9 besitzt ein Auge, durch das eine mit dem Rotor 11 formschlüssig verbundene Wählhebelwelle 30 hindurchtritt. Die Wählhebelwelle 30 ist mit dem Ganghebel im Fahrzeuginnenraum mechanisch oder elektromechanisch verbunden. Ein Randbereich 98, d.h. der Umfangsrand oder die Kante, des kreisrunden Auges der Sensorleiterplatte 9 ist von einem ringförmigen Steg 8 eingefasst, der vom Gehäusezwischenteil 3 ausgebildet ist. Dadurch dass der Stator, der die Sensorleiterplatte 9 umfasst, in einem Spritzvorgang zur Herstellung des Gehäusezwischenteils 3 mit eingespritzt wird, befindet sich der Stator zum Rotor 11 mit einer sehr hohen Toleranzgüte an einer vordefinierten Position. Die Reproduzierbarkeit der relativen Position des Stators zum Rotor 11 und somit die Systemtoleranz ist gegenüber herkömmlichen mit einem x-, y-, z- Versatz zu fertigenden Klebeverbindungen einer Sensorleiterplatte 9 in einem Gehäuse deutlich verbessert. Die Qualität des Positionssensors 6 ist somit erhöht und die Einstellbarkeit bei der Einrichtung der Steuervorrichtung 1 erleichtert.

Die Fig. 2 zeigt in perspektivischer Ansicht im Querschnitt die Steuervorrichtung 1. Die Grundplatte 2 wird auf ein nicht dargestelltes Getriebe als so genanntes Anbausteuergerät direkt auf das Getriebe im Motorraum montiert. Die Steuervorrichtung 1 muss also unter den Bedingungen wie Temperaturbelastung, Temperaturwechselbelastung, Beschleunigungen, Medien im Motorraum beständig sein.

Das Gehäusezwischenteil 3 ist durch eine Nut 14 in der Grundplatte 2 mit einer hervorstehenden Feder 15 zur sicheren Abdeckung gegen äußere Einflüsse mit einer Verklebung abgedichtet. Ebenso ist der Deckel 19 mit in Fig. 2 gezeigten Nutfederverklebungen 16, 17, 18 mit dem Gehäusezwischenteil 3 abgedichtet. Die Wählhebelwelle 30 ist durch eine Bohrung in der Grundplatte 2 von unten her bei der Montage eingesteckt. Auf die Wählhebelwelle 30 ist ein Rotoradapter 20 aufgesetzt, der wiederum formschlüssig mit dem Rotor 11 verbunden ist. Der Rotor 11 weist eine nicht dargestellte Spule auf, die mit zwei, nicht dargestellten Spulen auf der Sensorleiterplatte 9 induktiv zusammenwirkt. Im Deckel 19 ist eine Radialwellendichtung 21 eingesetzt, um die hervortretende Wählhebelwelle 30 abzudichten. Auf die Wählhebelwelle 30 wird ein nicht dargestellter mit dem Ganghebel in Wirkverbindung stehender mechanischer Wählhebel montiert.

Erfindungsgemäß ist der Stator des Positionssensors 6, der die zwei nicht dargestellten Spulen auf der Sensorleiterplatte 9 umfasst, direkt in das Gehäusezwischenteil 3 eingespritzt. Das Gehäusezwischenteil 3 bildet Seitenwände für das Gehäuse der Steuervorrichtung 1. Einen Gehäuseboden bildet die Grundplatte 2 und einen oberen Abschluß der Deckel 19. Der Stator mit der Sensorleiterplatte 9 ist vom Gehäusezwischenteil 3 mit Gehäusematerial umgeben. Es sind lediglich die Randbereiche 97, 98, d.h. die Kanten der Sensorleiterplatte 9 mit Stegen 7, 8 am inneren und äußeren Umfangsrand eingefasst. Somit können auf der Sensorleiterplatte 9 Halbleiterelektronikbauteile ohne Beeinträchtigung beim Einspritzen hervorstehen. Die Montagetoleranzen des Stators, die einen direkten Einfluss auf die Positionstoleranzen des Positionssensors 6 haben, sind somit vorteilhaft auf einen sehr engen Bereich gegenüber dem herkömmlichen Befestigungsverfahren mittels eines Klebemittels reduziert. Die Montageschritte sind verringert ,da das Klebeverfahren der Sensorleiterplatte 9 in das Gehäuse bei der Montage der Steuervorrichtung 1 entfällt.

Die Steuerschaltung 5 ist für eine gute Abfuhr der beim Betrieb der Schalter entstehenden Verlustwärme direkt auf die Grundplatte 2 geklebt.

Eine O-Ring-Dichtung 22, die in eine Nut am Boden der Grundplatte 2 eingepasst ist, dichtet den Raum um die Wählhebelwelle 30 von unten her gegen das Getriebe ab.

Die Fig. 3 zeigt in einer Explosionsdarstellung das vorteilhafte erfindungsgemäße Herstellungsverfahren einer erfindungsgemäßen Steuervorrichtung 1. Bei diesem Herstellungsverfahren ist die Montage deutlich vereinfacht, da die Sensorleiterplatte 9, die den Stator des Positionssensors 6 bildet, bereits positionsgenau mit sehr engen Montagetoleranzen in das Gehäusezwischenteil 3 eingespritzt ist. Der Klebeprozess, bei dem die Leiterplatte 9 in das Gehäusezwischenteil 3 eingeklebt wird, ist nicht mehr notwendig. Die Fig. 3 zeigt in der Explosionsdarstellung, dass die Steuerschaltung 5 direkt auf den Sockel auf der Grundplatte 2 aufklebbar ist. Außerdem wird ersichtlich, wie auf die Wählhebelwelle 30 der Rotoradapter 20 und der Rotor 11 formschlüssig auffädelbar sind. Der Deckel 19 mit der Radialringdichtung 21 dichtet die Steuervorrichtung 1 von oben her ab.

Alle Figuren zeigen lediglich schematische nicht maßstabsgerechte Darstellungen. Im Übrigen wird insbesondere auf die zeichnerischen Darstellungen für die Erfindung als wesentlich verwiesen.

## Patentansprüche

1. Elektronische Steuervorrichtung (1) zur Steuerung eines Automatikgetriebes mit einer Steuerschaltung (5), einem integrierten Stecker (4) und einem integrierten Positionssensor (6) in einem Gehäuse, wobei der Positionssensor (6) einen Stator und einen Rotor (11) umfasst und definierte Positionen eines Ganghebels misst, **dadurch gekennzeichnet, dass** der Stator des Positionssensors (6) vom Material des Gehäuses ortsfest eingespritzt ist.

2. Steuervorrichtung nach Anspruch 1, **dadurch gekennzeichnet, dass** der Stator zwei Spulen umfasst, die mit einer Spule am Rotor (11) nach einem induktiven Verfahren zusammenwirken.

3. Steuervorrichtung nach Anspruch 1, **dadurch gekennzeichnet, dass** der Stator eine Sensorleiterplatte (9) umfasst, deren Randbereiche (98, 97) von Stegen (7, 8) des Gehäuses ortsfest eingespritzt sind.

4. Steuervorrichtung nach Anspruch 1, **dadurch gekennzeichnet, dass** die Randbereiche (97, 98) der Sensorleiterplatte (9) des Positionssensors (6) mit Clipsstegen (7, 8) eingespritzt sind.

5. Steuervorrichtung nach Anspruch 1 oder 2, **dadurch gekennzeichnet, dass** die Sensorleiterplatte (9) des Positionssensors (6) in das Gehäuse eingespritzt ist.

6. Steuervorrichtung nach einem oder mehreren der vorhergehenden Ansprüche 1 bis 3, **dadurch gekennzeichnet, dass** das Gehäuse mehrteilig aufgebaut ist, insbesondere eine Grundplatte (2), ein Gehäusezwischenteil (3) und einen Deckel (19) umfasst.

7. Steuervorrichtung nach einem oder mehreren der vorhergehenden Ansprüche 1 bis 4, **dadurch gekennzeichnet, dass** die Sensorleiterplatte (9) in das Gehäusezwischenteil (3) eingespritzt ist.

8. Steuervorrichtung nach einem oder mehreren der vorhergehenden Ansprüche 1 bis 5, **dadurch gekennzeichnet, dass** das Gehäusezwischenteil (3) und der Deckel (19) aus Kunststoff und die Grundplatte (2) aus Aluminium hergestellt ist.

9. Steuervorrichtung nach einem oder mehreren der vorhergehenden Ansprüche 1 bis 8, **dadurch gekennzeichnet, dass** die den Randbereich (97) der Sensorleiterplatte (9), einfassenden Stege (7, 8) im Bereich von elektrischen Klebeverbindungen (10) unterbrochen sind.

10. Verfahren zur Herstellung einer Steuervorrichtung (1) zur Steuerung eines Automatikgetriebes mit einer Steuerschaltung (5), einem integrierten Stecker (4) und einem integrierten Positionssensor (6) in einem Gehäuse, wobei der Positionssensor (6) einen Stator und einen Rotor (11) umfasst und definierte Positionen eines Ganghebels misst, **dadurch gekennzeichnet, dass** ein Stator eines Positionssensors in ein Gehäuse (3) eingespritzt wird.

## Claims

1. Electronic control apparatus (1) for controlling an automatic transmission with a control circuit (5), an integrated plug (4) and an integrated position sensor (6) in a housing, wherein the position sensor (6) comprises a stator and a rotor (11), and measures defined positions of a gear lever, **characterized in that** the stator of the position sensor (6) is integrated in a positionally fixed fashion by injection moulding by the material of the housing.

2. Control apparatus according to Claim 1, **characterized in that** the stator comprises two coils which interact with a coil on the rotor (11) according to an inductive method.

3. Control apparatus according to Claim 1, **characterized in that** the stator comprises a sensor printed circuit board (9) whose edge regions (98, 97) are integrated in a positionally fixed fashion by injection moulding by webs (7, 8) of the housing.

4. Control apparatus according to Claim 1, **characterized in that** the edge regions (97, 98) of the sensor printed circuit board (9) of the position sensor (6) is integrated by injection moulding with clip webs (7, 8).

5. Control apparatus according to Claim 1 or 2, **characterized in that** the sensor printed circuit board (9) of the position sensor (6) is integrated into the housing by injection moulding.

6. Control apparatus according to one or more of the preceding Claims 1 to 3, **characterized in that** the housing is constructed in a plurality of parts, and comprises, in particular, a base plate (2), a housing intermediate part (3) and a lid (19).

7. Control apparatus according to one or more of the preceding Claims 1 to 4, **characterized in that** the sensor printed circuit board (9) is integrated into the housing intermediate part (3) by injection moulding.

8. Control apparatus according to one or more of the preceding Claims 1 to 5, **characterized in that** the housing intermediate part (3) and the lid (19) are manufactured from plastic, and the base plate (2) is manufactured from aluminium.

9. Control apparatus according to one or more of the preceding Claims 1 to 8, **characterized in that** the webs (7, 8) which enclose the edge region (97) of the sensor printed circuit board (9) are interrupted in the region of electrical bonded connections (10).

10. Method for manufacturing a control apparatus (1) for controlling an automatic transmission having a control circuit (5), an integrated plug (4) and an integrated position sensor (6) in a housing, wherein the position sensor (6) comprises a stator and a rotor (11), and measures defined positions of a gear lever, **characterized in that** a stator of a position sensor is integrated into a housing (3) by injection moulding.

## Revendications

1. Dispositif de commande électronique (1) pour commander une boîte de vitesses automatique avec un branchement de commande (5), un connecteur enfichable intégré (4) et un capteur de position intégré (6) dans un boîtier, le capteur de position (6) comprenant un stator et un rotor (11) et mesurant des positions définies d'un levier de sélection, **caractérisé en ce que** le stator du capteur de position (6) est moulé par injection de manière fixée en position dans le matériau du boîtier.

2. Dispositif de commande selon la revendication 1, **caractérisé en ce que** le stator comprend deux bobines qui coopèrent avec une bobine sur le rotor (11) selon un procédé inductif.

3. Dispositif de commande selon la revendication 1, **caractérisé en ce que** le stator comprend une carte à circuits imprimés de capteur (9) dont les plages de bord (98, 97) sont moulées par injection de manière fixée en position dans des nervures (7, 8) du boîtier.

4. Dispositif de commande selon la revendication 1, **caractérisé en ce que** les plages de bord (97, 98) de la carte à circuits imprimés de capteur (9) du capteur de position (6) sont moulées par injection avec des nervures d'enclipsage (7, 8).

5. Dispositif de commande selon la revendication 1 ou 2, **caractérisé en ce que** la carte à circuits imprimés de capteur (9) du capteur de position (6) est moulée par injection dans le boîtier.

6. Dispositif de commande selon l'une quelconque ou plusieurs des revendications précédentes 1 à 3, **caractérisé en ce que** le boîtier est formé de plusieurs parties, notamment d'une plaque de base (2), d'une partie intermédiaire de boîtier (3) et d'un couvercle (19).

7. Dispositif de commande selon l'une quelconque ou plusieurs des revendications précédentes 1 à 4, **caractérisé en ce que** la carte à circuits imprimés de capteur (9) est moulée par injection dans la partie intermédiaire de boîtier (3).

8. Dispositif de commande selon l'une quelconque ou plusieurs des revendications précédentes 1 à 5, **caractérisé en ce que** la partie intermédiaire de boîtier (3) et le couvercle (19) sont fabriqués en plastique et la plaque de base (2) est fabriquée en aluminium.

9. Dispositif de commande selon l'une quelconque ou plusieurs des revendications précédentes 1 à 8, **caractérisé en ce que** les nervures (7, 8) enserrant la plage de bord (97) de la carte à circuits imprimés de capteur (9) sont interrompues dans la région de connexions électriques collées (10).

10. Procédé de fabrication d'un dispositif de commande (1) pour commander une boîte de vitesses automatique avec un branchement de commande (5), un connecteur enfichable intégré (4) et un capteur de position intégré (6) dans un boîtier, le capteur de position (6) comprenant un stator et un rotor (11) et mesurant des positions définies d'un levier de sélection, **caractérisé en ce qu**'un stator d'un capteur de position est moulé par injection dans un boîtier (3).
